# EUROPEAN PATENT APPLICATION

(11) **EP 2 352 303 A1**
(43) Date of publication of application: **03.08.2011**
(21) Application number: 10821884.3
(22) Date of filing: 27.09.2010
(51) Int. Cl.: H04N 13/00, H04N 7/173

(54) **SIGNAL TRANSMISSION METHOD, SIGNAL TRANSMITTER APPARATUS AND SIGNAL RECEIVER APPARATUS**

(30) Priority: 05.10.2009 JP 2009231521
(71) Applicant: Sony Corporation, Tokyo 108-0075 (JP)
(72) Inventor: KITAZATO, Naohisa, Tokyo 108-0075 (JP)
(74) Representative: Davies, Simon Robert
(86) International application number: PCT/JP2010/066705
(87) International publication number: WO 2011/043213

(57) **Abstract**

Provided is a signal transmission method including a step of, if one part of a content distributed through a network includes a stereoscopic image display zone for displaying a stereoscopic image, transmitting with the content, switching information related to a switching timing of the stereoscopic image display zone in units of contents; transmission method information indicating a transmission method of the stereoscopic image; and distribution source information indicating a distribution source of another content when the stereoscopic image or a two-dimensional image corresponding to the stereoscopic image is distributed in another content.

## Description

### Technical Field

The present invention relates to a signal transmission method, a signal transmission device and a signal reception device.

### Background Art

The 3D broadcasting service for displaying a three dimensional (3D) image on a screen so that the viewer can enjoy a stereoscopic video is assumed to widely spread in the future. The following requirements are desirably met to realize the 3D broadcasting service.

The program of the channel (3D channel) for displaying the three-dimensional image and the content (3D content) for displaying the three-dimensional image may not all be created with a signal (3D signal) for displaying the three-dimensional image. Of course, all programs may be created with the 3D signal, but the three-dimensional image is assumed to have a high possibility of being used in one part of the program or the content. In the case of broadcasting, the viewer may get tired of viewing if the three-dimensional image is constantly displayed on the screen, and the production cost may increase if all the programs and contents are produced as 3D compatible. The video in which the representation by 3D is effective is restrictive. Therefore, in the 3D broadcasting service, a usage method of 3D displaying only a specific program, and furthermore, only a specific scene is assumed.

In the broadcasting service using the broadband line such as the IP broadcasting (IPTV; Internet Protocol Television), the compatibility/non-compatibility of the display of the 3D image is checked in advance and different contents are respectively provided to the terminal compatible to the display of the 3D image and the terminal not compatible to the display of the 3D image. In other words, the distribution server transmits the 3D content to the terminal compatible to the display of the 3D image and the 2D content to the terminal not compatible to the display of the 3D image.

Consideration is desirably made in using the service and the content of the 3D portion even in the receiver of the related art that is not compatible to the display of the three-dimensional image, and to this end, the 3D portion is to be made viewable in 2D even with the receiver compatible to the display of the three-dimensional image.

Furthermore, the user of the 3D compatible receiver may not want to view the video in 3D even if the 3D program and the 3D content are received with the receiver (3D compatible receiver) compatible to the display of the three-dimensional image. Thus, it is desirable for the user to be able to select and switch between the viewing of the 2D video and the viewing of the 3D video in the 3D compatible receiver. When displaying the 2D image on the 3D compatible receiver, the image quality same as the normal 2D video is desired.

The technique for switching and displaying the 2D video and the 3D video on the 3D compatible receiver is described in patent literatures 1, 2.

### Citation List

### Patent Literature

- Patent Literature 1:: JP 2005-6114 (A)
- Patent Literature 2:: JP 2007-13994 (A)

### Summary of Invention

### Technical Problem

However, since the switching of the 2D video and the 3D video by one stream is given as the premise in the techniques of the related art including the patent literatures 1, 2, the 3D video is to be converted to the 2D video in the zone for displaying the 3D video in the 3D non-compatible receiver, but the image quality may lower when displaying the 2D video. Furthermore, the transmission method of the video data that can respond to both the 3D compatible receiver and the 3D non-compatible receiver is not taken into consideration in any operation method or 3D video transmission method.

The present invention is made in view of the above-mentioned issue, and aims to provide a novel and improved signal transmission method, a signal transmission device, and a signal reception device, which are capable of responding to the display of the 2D video and the 3D video on the reception side regardless of the 3D video transmission operation method and the 3D video transmission method in the broadcasting service using the broadband line.

### Solution to Problem

According to an aspect of the present invention in order to achieve the above-mentioned object, there is provided a signal transmission method including the step of, if at least one part of a content distributed through a network includes a stereoscopic image display zone for displaying a stereoscopic image, transmitting with the content: switching information related to a switching timing of the stereoscopic image display zone in units of contents; transmission method information indicating a transmission method of the stereoscopic image; and distribution source information indicating a distribution source of another content when the stereoscopic image or a two-dimensional image corresponding to the stereoscopic image is distributed in another content.

The transmitting step may include transmitting the switching information by describing inside the content, and transmitting information other than the switching information by describing inside information distributed prior to reproduction of the content.

The transmitting step may transmit the switching information, the transmission method information, and the distribution source information by describing inside the content.

When a reception side switches to the two-dimensional image corresponding to the stereoscopic image in the stereoscopic image display zone, switch may be made to the transmission of another content for displaying the two-dimensional image prepared in advance.

The transmitting step may include starting the transmission of another content at a time point the reception side switched to the two-dimensional image.

The information transmitted in the transmitting step may be described inside an minf container of an MP4 container.

The information transmitted in the transmitting step may be described inside a moov container and inside a mdat box of the MP4 container.

The information transmitted in the transmitting step may be described inside a moov container and inside a moof container of the MP4 container.

According to another aspect of the present invention in order to achieve the above-mentioned object, there is provided a signal reception device including: a reception unit for receiving stereoscopic image data for displaying a stereoscopic image, and for receiving stereoscopic image related information in a stereoscopic image display zone for displaying the stereoscopic image contained in at least one part of a content distributed through a network along with the content; a switching control unit for switching display of the stereoscopic image or a two-dimensional image using the information received by the reception unit; and a display unit for displaying the stereoscopic image in the stereoscopic image display zone based on the stereoscopic image related information, wherein the stereoscopic image related information includes: switching information related to a switching timing of the stereoscopic image display zone in units of contents, transmission method information indicating a transmission method of the stereoscopic image, and distribution source information indicating a distribution source of another content when the stereoscopic image or a two-dimensional image corresponding to the stereoscopic image is distributed in another content.

The switching control unit may automatically switch to the stereoscopic image or the two-dimensional image when reaching a switching timing of the stereoscopic image display zone.

The switching control unit may instruct switching of reception of another content with respect to the reception unit when another content for displaying the two-dimensional image corresponding to the stereoscopic image exists in the stereoscopic image display zone.

According to another aspect of the present invention in order to achieve the above-mentioned object, there is provided a signal transmission device including: an image data generation unit for generating stereoscopic image data for displaying a stereoscopic image; an information generation unit for generating stereoscopic image related information in a stereoscopic image display zone for displaying the stereoscopic image contained in at least one part of a content distributed through a network; and a transmission unit for transmitting the stereoscopic image data generated by the image data generation unit and the stereoscopic image related information generated by the information generation unit along with the content, wherein the stereoscopic image related information generated by the information generation unit and transmitted with the content includes: switching information related to a switching timing of the stereoscopic image display zone in units of contents, transmission method information indicating a transmission method of the stereoscopic image, and distribution source information indicating a distribution source of another content when the stereoscopic image or a two-dimensional image corresponding to the stereoscopic image is distributed in another content.

The information generation unit may describe the switching information inside the content, and describes information other than the switching information inside information distributed prior to reproduction of the content.

The information generation unit may describe the switching information, the transmission method information, and the distribution source information inside the content for transmission.

When a reception side switches to the two-dimensional image corresponding to the stereoscopic image in the stereoscopic image display zone, the transmission unit may switch to the transmission of another content for displaying the two-dimensional image prepared in advance.

The transmission unit may start the transmission of another content at a time point the reception side switched to the two-dimensional image.

The information transmitted by the transmission unit may be described inside an minf container of an MP4 container.

The information transmitted by the transmission unit may be described inside a moov container and inside a mdat box of the MP4 container.

The information transmitted by the transmission unit may be described inside a moov container and inside a moof container of the MP4 container. Advantageous Effects of Invention

According to the present invention, a novel and improved signal transmission method, a signal transmission device, and a signal reception device capable of responding to the display of the 2D video and the 3D video on the reception side regardless of the 3D video transmission operation method and the 3D video transmission method in the broadcasting service using the broadband line are provided.

### Brief Description of Drawings

[Fig. 1] Fig. 1 is an explanatory view showing the concept of the transmission mode of a 3D video.
[Fig. 2] Fig. 2 is an explanatory view showing the concept of the transmission mode of a 3D video.
[Fig. 3] Fig. 3 is an explanatory view showing the concept of the transmission mode of a 3D video.
[Fig. 4] Fig. 4 is an explanatory view showing the concept of the transmission mode of a 3D video.
[Fig. 5] Fig. 5 is an explanatory view showing the concept of the transmission mode of a 3D video.
[Fig. 6] Fig. 6 is an explanatory view showing the assumed operation on the user side when the 3D program and the 3D content are transmitted.
[Fig. 7] Fig. 7 is an explanatory view showing the configuration of the receiver 20 according to one embodiment of the present invention.
[Fig. 8] Fig. 8 is an explanatory view showing the configuration of the content server 10 according to one embodiment of the present invention.
[Fig. 9] Fig. 9 is a flowchart showing the operation of the receiver 20 when operating in the auto mode.
[Fig. 10] Fig. 10 is a flowchart showing the operation of the receiver 20 when operating in the manual mode.
[Fig. 11] Fig. 11 is an explanatory view showing the outline of the content switching process when the simul-2D content exists in the received content.
[Fig. 12] Fig. 12 is an explanatory view showing a first example of an inserting position of the meta information.
[Fig. 13] Fig. 13 is an explanatory view showing a description example of the meta information in the first example of the inserting position of the meta information.
[Fig. 14] Fig. 14 is an explanatory view showing a second example of the inserting position of the meta information.
[Fig. 15] Fig. 15 is an explanatory view showing a description example in binary of when describing the meta information inside the MP4 container.
[Fig. 16] Fig. 16 is an explanatory view showing a first description example of the control data.
[Fig. 17] Fig. 17 is an explanatory view showing a second description example of the control data.
[Fig. 18] Fig. 18 is an explanatory view showing a third description example of the control data.

### Description of Embodiments

Hereinafter, preferred embodiments of the present invention will be described in detail with reference to the appended drawings. Note that, in this specification and the drawings, elements that have substantially the same function and structure are denoted with the same reference signs, and repeated explanation is omitted.

The description will be made in the following order.
<1. Assumed video transmission method>
   [1-1. Type (whole 3D content)]
   [1-2. Type 2 (pair of 2D content and 3D content)]
   [1-3. Type 3 (partial 3D content)]
   [1-4. Type 4 (partial external 3D file)]
   [1-5. Type 5 (partial 3D content + simul-2D content)]
   [1-6. Conclusion]
<2. Assumed user operation>
<3. Data covering video transmission method>
   [3-1. Meta information]
   [3-2. Control data]
   [3-3. Conclusion]
<4. Configuration of receiver>
<5. Configuration of distribution server>
<6. Operation of receiver>
   [6-1. Case of operating in auto mode]
   [6-2. Case of operating in manual mode]
<7. Description example of meta information>
   [7-1. First description example (described inside metafile)]
   [7-2. Second description example (described inside MP4 container)]
<8. Description example of control data>
   [8-1. First description example]
   [8-2. Second description example]
   [8-3. Third description example]
<9. Conclusion>

### <1. Assumed video transmission method>

First, the transmission mode of the 3D video assumed when the 3D content is transmitted from the broadcast station or the content provider in the broadcasting service using the broadband line will be described before describing the preferred embodiments of the present invention in detail, and then the preferred embodiments of the present invention for covering the assumed transmission mode of the 3D video will be described.

### [1-1. Type 1 (whole 3D content)]

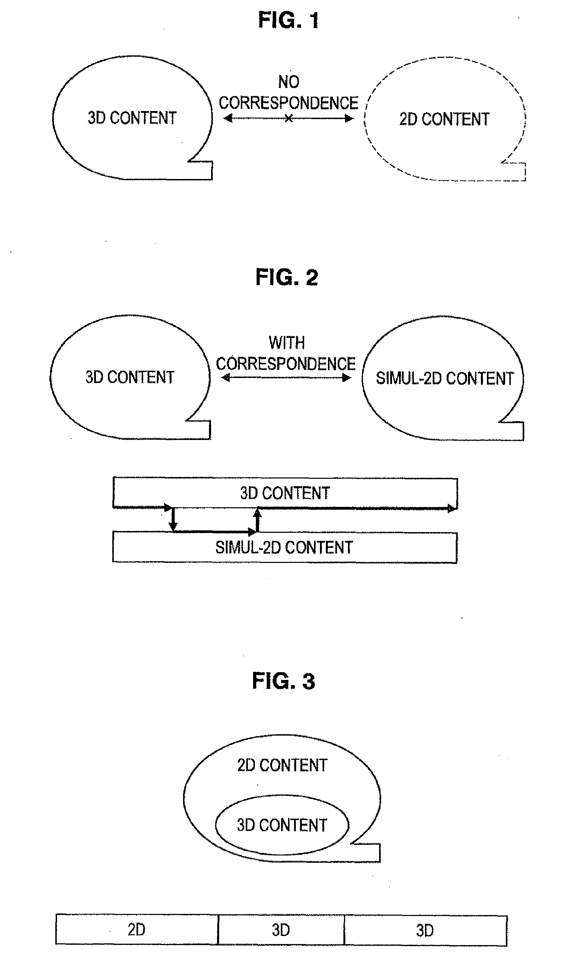

Firstly, a case in which all the 3D contents are configured with one file of only the stream (3D stream) for transmitting the 3D video will be described as type 1. Fig. 1 is an explanatory view showing the concept of the transmission mode of type 1. As shown in Fig. 1, this type 1 is a transmission mode in which all the 3D contents are configured with one file of only the 3D stream, and the stream (2D stream) for transmitting the 2D video is either not present or, even if present, it is prepared as merely a separate content with no direct relation.

The transmission mode of type 1 is the basic of the whole concept of the 3D content. However, if the entire content is all produced as 3D, the degree of freedom is lost and the production cost becomes high. Furthermore, when applying a 3D method that is not scalable (non-scalable 3D method) such as the side by side (SBS) method or the frame sequential (FSQ) method, the 2D video is generated using only half of the stream when generating the 2D video from the 3D stream in the 3D compatible terminal, and hence the image quality degrades. Furthermore, switch may not be made from the middle of the 3D content to the 2D content created for terminals non-compatible to the display of the 3D video. The 2D video can be seamlessly viewed with the 3D compatible terminal without degrading the image quality through the 3D method that is scalable (scalable 3D method) such as MVC (Multi View Coding). This has an advantage in that the operation and the mounting are easy since the 3D content and the 2D content may not be connected.

### [1-2. Type 2 (pair of 2D content and 3D content)]

Next, a case of transmitting the stream by forming a pair of 2D content and 3D content will be described as type 2. Fig. 2 is an explanatory view showing the concept of the transmission mode of type 2. This type 2 is an operation method assumed to be applied in the case of the non-scalable 3D method. This type 2 is an operation method, in which all the 3D contents are configured with one file of only the 3D stream for transmitting the 3D video, where the switch between the 3D video and the 2D video is enabled by the 2D content connected with the 3D content (hereinafter, the 2D content connected with the 3D content is also referred to as "simul-2D content").

When limiting to a case of producing the entire content all as 3D, the transmission mode of type 2 is similar to type 1 in that the degree of freedom is lost and the production cost becomes high if the entire content is produced as 3D. The lowering of image quality when viewing the 2D video at the 3D compatible terminal does not occur, as opposed to the case of type 1, through the use of the simul-2D content. However, the 3D content, the simul-2D content, the information for paring, and the mounting and the operation for pairing become more complicating than in type 1. The time until starting the content and displaying the same on the screen is necessary when switching between contents, and thus a smooth switching is slightly difficult.

### [1-3. Type 3 (Partial 3D content)]

Next, a case in which one part of one content is created as 3D will be described as type 3. Fig. 3 is an explanatory view showing the concept of the transmission mode of type 3. This type 3 is a transmission mode of transmitting a stream in which the 2D video portion and the 3D video portion are contained in one content file.

When partially using the 3D video as in type 3, devisal is desired for the specification and the mounting regarding the switching of the 2D video and the 3D video on the same stream, where the switching between the 2D video and the 3D video may be carried out seamlessly When applying the non-scalable 3D method, the image quality degrades in the viewing of the 2D video at the 3D video zone since the 2D video is generated using only half of the stream in the 3D compatible terminal. As the simul-2D content such as type 2 does not exist in type 3, the content may not be switched from the middle of the content to the 2D content for the 3D non-compatible terminal. In the case of the scalable 3D method, the 2D video at the 3D compatible terminal can be seamlessly viewed without degrading the image quality.

### [1-4. Type 4 (Partial external 3D file)]

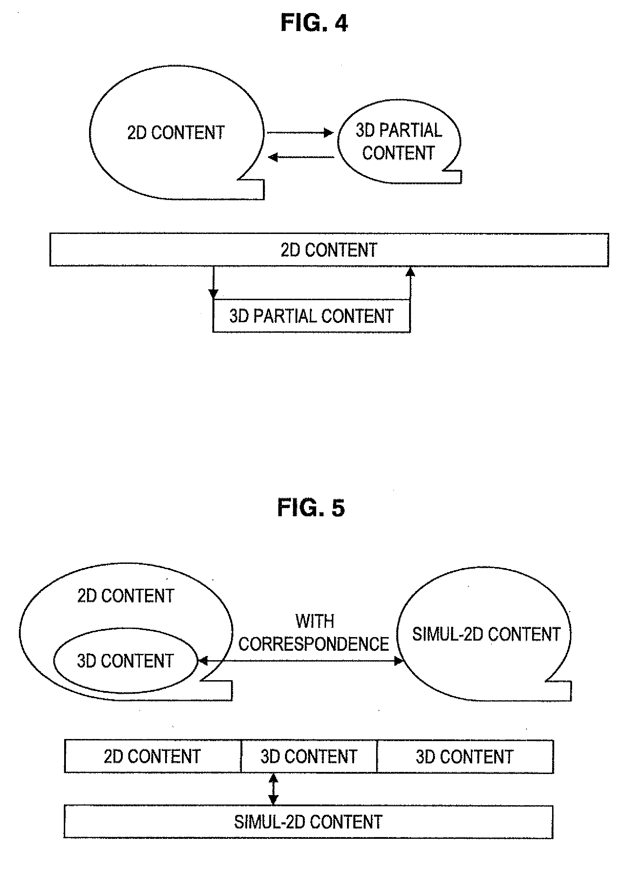

Next, a case of being configured with the 2D content file, which becomes the main, and the 3D content file, which is referenced from the 2D content in the 3D video zone, when one part of one content is 3D will be described as type 4. Fig. 4 is an explanatory view showing the concept of the transmission mode of type 4.

The transmission mode of the type 4 is assumed to be applied in the case of the content in which the 2D video is basically viewed and the 3D video is viewed in a partial zone as an option. As opposed to the case of type 3, the devisal is not desired for the specification and the mounting regarding the switching of the 2D video and the 3D video on the same stream. The 3D content file is a different file from the 2D content file, and thus the time until starting the content and displaying the same on the screen is necessary, and thus a smooth switching is slightly difficult, similar to type 2. The same 2D content is started and reproduced at first for the 3D compatible terminal and the 3D non-compatible terminal, but the information for associating the 2D content file and the 3D content file is desired to start and reproduce the 3D content in the 3D video zone. If the 3D video zone is in plurals, a plurality of 3D content files is to be managed in association with the 2D content file. The transmission mode of type 4 enables the 2D content and the 3D content to be separately created, which aspect becomes a merit in terms of operation of the production.

### [1-5. Type 5 (Partial 3D content + simul-2D content)]

Lastly, a case of combining the partial 3D content method shown in type 3 and the simul-2D content method shown in type 2 will be described as type 5. Fig. 5 is an explanatory view showing the concept of the transmission mode of type 5. The operation mode of type 5 is the operation method assumed to be applied in the case of the non-scalable 3D method.

In the operation mode, the receiver for receiving the content uses the partial 3D content when viewing the 3D video, and uses the simul-2D content including the 3D non-compatible terminal when viewing the 2D video. When switching from the 3D video to 2D video, the receiver uses the simul-2D content. The operation mode of type 5 is assumed to excel the operation mode of type 4 in that the 3D content and the 2D content can be smoothly switched.

### [1-6. Conclusion]

The transmission mode of the 3D video assumed when using the broadcasting service that uses the broadband line includes type 1 to type 5. The transmission mode other than the type described above is sufficiently considered to appear with enhancement in the communication infrastructure building and the performance of the video receiver in the future, but the embodiment of the present invention will be described on the premise of the transmission mode of type 1 to type 5 in the following description.

### <2. Assumed user operation>

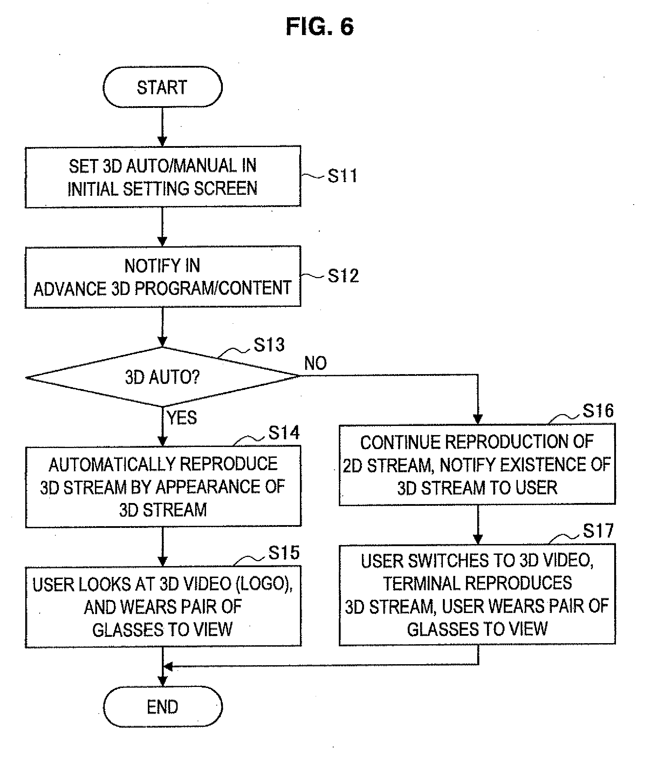

Next, the operation on the user side assumed when the 3D program and the 3D content are transmitted from the broadcast station, the content distribution provider will be described. Fig. 6 is an explanatory view showing the assumed operation on the user side when the 3D program and the 3D content are transmitted.

On the user side, the setting is made to whether automatically display the 3D video on the screen when the 3D period starts or to display the 3D video on the screen by the hand of the user with the remote controller and the like in the initial setting screen with respect to the 3D compatible receiver (step S11). The mode of automatically displaying the 3D video on the screen is referred to as the auto mode, and the mode of displaying the 3D video on the screen by the hand of the user is referred to as the manual mode for the sake of convenience of the description.

Notification is made from the content distribution provider as the 3D program in which the 3D video flows by the meta information at the time of content selection of the user in advance (step S12). When the reproduction of the 3D content starts and the 3D stream arrives at the receiver (step S13), the received 3D stream is automatically reproduced and the 3D video is displayed on the screen when the 3D stream arrives at the receiver if the display mode of the receiver is auto mode (step S14). The user can enjoy the stereoscopic video by wearing a pair of glasses and viewing the 3D video displayed on the screen (step S15). When displaying the 3D video with the receiver, a mark indicating that the 3D video is being displayed may be displayed together at one part of the screen.

If the display mode of the receiver is the manual mode, the reproduction of the 2D stream is continued (or the 2D video is created from the 3D stream) even if the 3D stream arrives at the receiver, and the receiver notifies the user of the existence of the 3D stream (step S16). The notification on the existence of the 3D stream by the receiver may be made by displaying on the screen a mark indicating that the 3D video is being displayed at one part of the screen. The receiver reproduces the received 3D stream by switching the display of the receiver from the display of the 2D video to the display of the 3D video with the remote controller and the like. The user can enjoy the stereoscopic video by wearing a pair of glasses and viewing the 3D video displayed on the screen (step S 17).

On the user side, the above operation is assumed when the 3D content is transmitted from the content distribution provider, and the like. The operations other than the above-described operation can also be considered on the user side. However, the following description will be made on the premise that the display mode of the receiver includes the auto mode and the manual mode.

### <3. Data covering video transmission method>

One example of the data used to cover the video transmission method of type 1 to type 5 described above will now be described. The following description describes the method assumed to be appropriate to enable the operation of the 3D content by the video transmission method of type 1 to type 5, but the data used to enable the operation of the 3D content is not limited to the following in the present invention.

### [3-1. Meta information]

In the present embodiment, the information regarding the entire content is described in the stream as meta information. The information regarding the entire content includes information that distinguishes whether the content is 2D or 3D, or partially 3D, whether the head is 2D or 3D when partially 3D, and what the transmission method of the 3D is when the content is 3D.

The information regarding the entire content also includes information on whether or not the simul-2D content is included when the content is 3D. When the simul-2D content does not exist in the same folder as the 3D content in the distribution server that distributes contents, the simul-2D content is described in the meta information by the URL (Uniform Resource Locator) of the distribution source.

The information regarding the entire content also includes information that distinguishes whether the 3D zone is the same stream or a separate stream when one part of the content is 3D. When the 3D zone is a separate stream, the URL of such stream is described in the meta information.

### [3-2. Control data]

In the present embodiment, the information for directly controlling the video stream and the audio stream (AV stream) is described in the stream separate from the metadata as control data. The control data includes data indicating a switching timing for switching from 2D to 3D or from 3D to 2D when one part of the content is 3D. The data indicating the switching timing may be data that starts count down from a few seconds before the switching.

### [3-3. Conclusion]

Therefore, the video transmission method of type 1 to type 5 can be covered by transmitting the information regarding the entire content as the metadata and the information for directly controlling the AV stream as the control from the distribution server to the receiver. The description area and the description content of the specific data will be described in detail later.

### <4. Configuration of receiver>

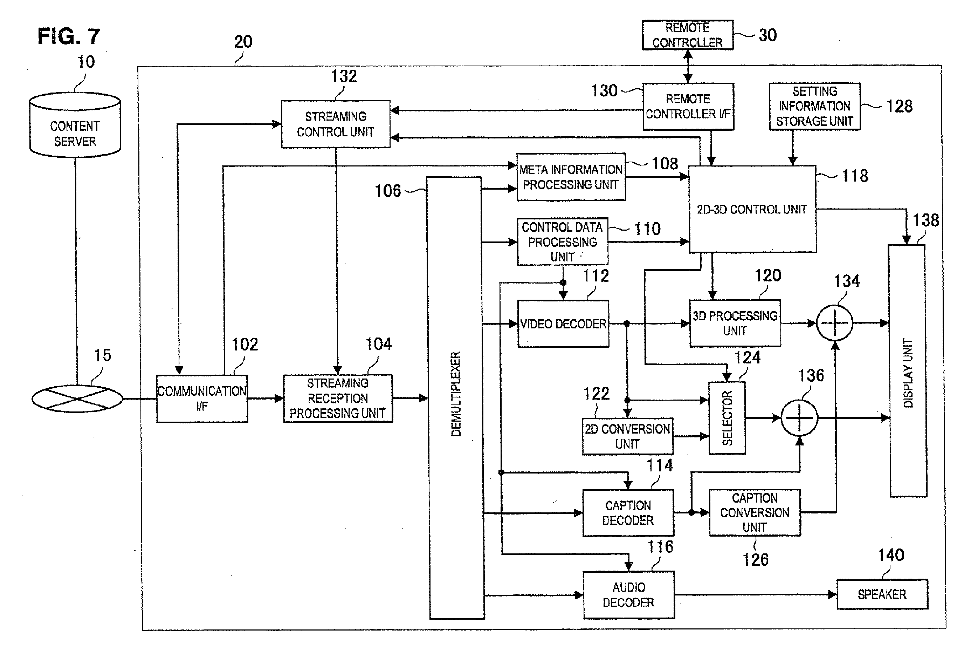

Next, the configuration of the receiver 20 according to one embodiment of the present invention will now be described. Fig. 7 is an explanatory view showing the configuration of the receiver 20 according to one embodiment of the present invention. The receiver 20 may be a television receiver capable of being connected to the Internet, or may be a personal computer capable of being connected to the Internet, or a portable information terminal such as a portable game machine, a portable music player, and the like. The configuration of the receiver 20 according to one embodiment of the present invention will be described below using Fig. 7.

As shown in Fig. 7, the receiver 20 according to one embodiment of the present invention is configured to include a communication I/F 102, a streaming reception processing unit 104, a demultiplexer 106, a meta information processing unit 108, a control data processing unit 110, a video decoder 112, a caption decoder 114, an audio decoder 116, a 2D-3D control unit 118, a 3D processing unit 120, a 2D conversion unit 122, a selector 124, a caption conversion unit 126, a setting information storage unit 128, a remote controller I/F 130, a streaming control unit 132, adders 134, 136, a display unit 138, and a speaker 140.

The communication I/F 102 receives the stream transmitted from the content server 10 through the Internet and other networks 15. The stream received by the communication I/F 102 is sent to the streaming reception processing unit 104.

The streaming reception processing unit 104 executes a predetermined reception processing such as error correction and stream synchronization on the stream received by the communication I/F 102. The stream subjected to the predetermined reception processing such as error correction and stream synchronization by the streaming reception processing unit 104 is sent to the demultiplexer 106. The streaming reception processing unit 104 is also specified with the stream to become the target of the reception processing by the streaming control unit 132.

The demultiplexer 106 separates the stream subjected to the predetermined reception processing in the streaming reception processing unit 104 to video, audio, and the like. The demultiplexer 106 separates the stream to metadata, control data, video data, audio data, and caption data. The demultiplexer 106 provides the metadata separated from the stream to the meta information processing unit 108, the control data to the control data processing unit 110, the video data to the video decoder 112, the caption data to the caption decoder 114, and the audio data to the audio decoder 116.

The meta information processing unit 108 receives the metadata transmitted from the demultiplexer 106, and executes the analysis of the metadata. Whether the content transmitted from the content server 10 on the stream is 2D or 3D, and the type of transmission method when the content is 3D can be recognized by analyzing the metadata in the meta information processing unit 108. The analysis result of the meta information by the meta information processing unit 108 is sent to the 2D-3D control unit 118.

The control data processing unit 110 receives the control data sent from the demultiplexer 106, and executes the analysis of the control data. The switching timing of the content transmitted from the content server 10 on the stream from 2D to 3D or from 3D to 2D can be recognized by analyzing the control data in the control data processing unit 110. The analysis result of the control data by the control data processing unit 110 is sent to the 2D-3D control unit 118.

The video decoder 112 receives the coded video data separated by the demultiplexer 106, and executes a predetermined decoding process on the provided coded video data. The caption decoder 114 receives the coded caption data separated by the demultiplexer 106, and executes a predetermined decoding process on the provided caption data. The audio decoder 116 receives the coded audio data separated by the demultiplexer 106, and executes a predetermined decoding process on the provided coded audio data.

The 2D-3D control unit 118 receives the analysis result of the meta information from the meta information processing unit 108 and the analysis result of the control data from the control data processing unit 110, and controls the switch from the 2D video signal for displaying the 2D video to the 3D video signal for displaying the 3D video, or vice versa using such analysis results. The 2D-3D control unit 118 checks the correspondence situation to the 3D display of the receiver 20 from the setting information of the receiver 20 stored in the setting information storage unit 128, and executes a control corresponding to the setting of the receiver 20.

The 3D processing unit 120 executes various types of signal processing for displaying as the 3D video based on the instruction from the 2D-3D control unit 118 with respect to the video signal provided from the video decoder 112. The various types of signal processing in the 3D processing unit 120 include sorting of the video data according to the 3D video method, and the like. The video signal subjected to signal processing in the 3D processing unit 120 is transmitted to the adder 134.

The 2D conversion unit 122 executes a conversion process for generating the 2D video from the 3D video with respect to the video signal provided from the video decoder 112. The conversion process in the 2D conversion unit 122 is executed when viewing at 2D instead of 3D in case that the content produced in whole 3D as in type 1 is transmitted from the content server 10. The video signal subjected to the conversion process in the 2D conversion unit 122 is transmitted to the selector 124.

The selector 124 selects either one of the video signal provided from the video decoder 112 or the video signal subjected to the conversion process in the 2D conversion unit 122, and outputs the same. The selection by the selector 124 is carried out by the instruction of the 2D-3D control unit 118. The video signal selected and output from the selector 124 is transmitted to the adder 136.

The caption conversion unit 126 receives the caption data decoded by the caption decoder 114, and executes a 3D conversion process for superimposing on the 3D video. The caption can also be stereoscopically displayed in addition to the video by having the caption conversion unit 126 execute the 3D conversion process on the caption data.

The setting information storage unit 128 stores information regarding the receiver 20. The information regarding the receiver 20 that is stored in the setting information storage unit 128 includes information such as compatibility/non-compatibility of the display of the 3D video and corresponding display form of the 3D video when compatible to the display of the 3D video, the setting information of auto/manual set by the user, and the like. The information regarding the receiver 20 that is stored in the setting information storage unit 128 is read out from the setting information storage unit 128 in time of various types of controls by the 2D-3D control unit 118, and is used for the various types of controls in the 2D-3D control unit 118.

The remote controller I/F 130 receives a signal from the remote controller 30. The remote controller I/F 130 receives the signal from the remote controller 30 by infrared light or wirelessly. The remote controller I/F 130 sends an instruction to the 2D-3D control unit 118 and the streaming control unit 132 according to the signal from the remote controller 30. For instance, if the signal from the remote controller 30 instructs switching from the 3D video to the 2D video, the remote controller I/F 130 instructs the 2D-3D control unit 118 to switch from the 3D video to the 2D video, so that the 2D-3D control unit 118 starts the switching control from the 3D video to the 2D video based on such instruction. Furthermore, if the signal from the remote controller 30 instructs stop or pause of reproduction, and variable speed reproduction, the remote controller I/F 130 instructs the streaming control unit 132 to carry out the operation instructed from the remote controller 30.

The streaming control unit 132 executes the reproduction control such as start of reproduction, stop, pause, and variable speed reproduction according to the instruction from the 2D-3D control unit 118 or from the remote controller I/F 130. The streaming control unit 132 also executes a control for reproducing and activating a specific content. When receiving the reproduction and activation instruction of a specific content, the streamlining control unit 132 instructs the communication I/F 102 to access and receive the specified content and instructs the streaming reception processing unit 104 to execute a predetermined reception processing on the content to be reproduced and activated.

The adder 134 superimposes the caption data, which is executed with the 3D conversion process by the caption conversion unit 126, on the 3D video signal output from the 3D processing unit 120, and outputs the resultant to the display unit 138. The adder 136 superimposes the caption data, which is decoded by the caption decoder 114, on the 2D video signal output from the selector 124, and outputs the resultant to the display unit 138.

The display unit 138 selects either the 2D or the 3D signal transmitted from the adders 134, 136 according to the instruction from the 2D-3D control unit 118, and displays the image. The liquid crystal panel, and the like may be used for the display unit 138, but those other than the liquid crystal panel may be used in the present invention. The speaker 140 outputs audio using the audio signal decoded by the audio decoder 116.

The configuration of the receiver 20 according to one embodiment of the present invention has been described above using Fig. 7. The configuration of the content server 10 according to one embodiment of the present invention will now be described.

### <5. Configuration of distribution server>

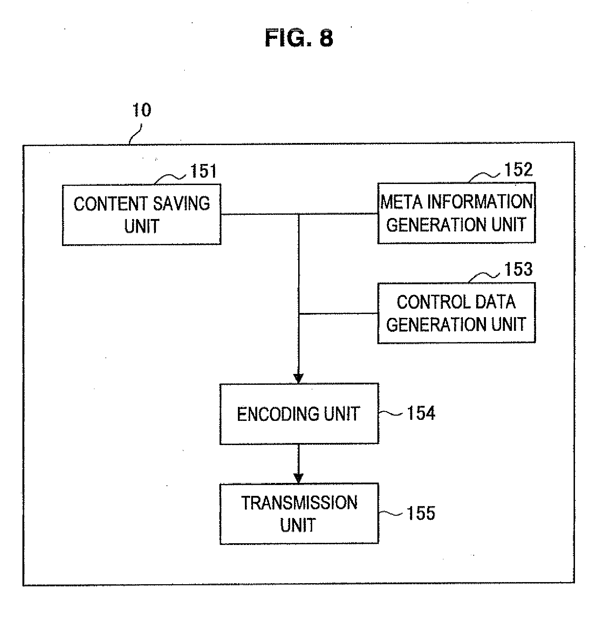

Fig. 8 is an explanatory view showing the configuration of the content server 10 according to one embodiment of the present invention. The configuration of the content server 10 according to one embodiment of the present invention will be described below using Fig. 8.

As shown in Fig. 8, the content server 10 according to one embodiment of the present invention is configured to include a content saving unit 151, a meta information generation unit 152, a control data generation unit 153, an encoding unit 154, and a transmission unit 155.

The content saving unit 151 is configured by hard disc and the like, and saves the data of the content. The meta information generation unit 152 generates the basic information of the content as metadata, where information on whether the content is 2D or 3D, or the transmission method etc. when the content is 3D are generated. The control data generation unit 153 generates information regarding the switching timing of the 2D and the 3D of the content. The encoding unit 154 encodes the data of the content saved in the content saving unit 151 and the information generated by the meta information generation unit 152 and the control data generation unit 153 with a predetermined encoding method. The transmission unit 155 transmits the data encoded by the encoding unit 154 to the network 15.

The configuration of the content server 10 according to one embodiment of the present invention has been described above using Fig. 8.

### <6. Operation of receiver>

The operation of the receiver 20 according to one embodiment of the present invention will now be described. In the following description, the operation in two ways for when the receiver 20 operates in the auto mode and for when the receiver 20 operates in the manual mode will be described.

### [6-1. Case of operating in auto mode]

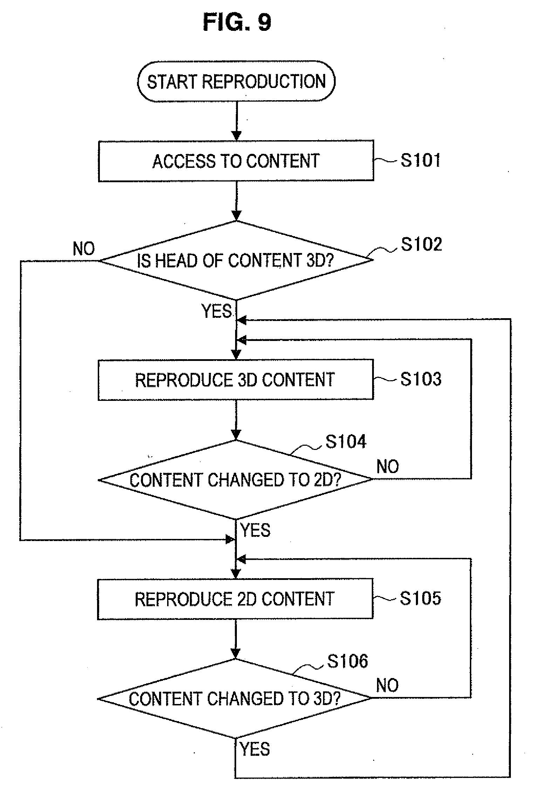

First, the operation of the receiver 20 when the receiver 20 operates in the auto mode will be described. Fig. 9 is a flowchart showing the operation of the receiver 20 when operating in the auto mode. The operation of the receiver 20 when operating in the auto mode will be described below using Fig. 9.

When reproducing the content with the receiver 20 operating in the auto mode, the receiver 20 first accesses the content of the content server 10 (step S101). After the content is transmitted from the content server 10 to the receiver 20, the receiver 20 then determines whether the head of the content is 3D (step S102). The determination on whether the head of the content is 3D or not is made by the 2D-3D control unit 118, for example. The information on whether the head of the content is 3D is described in the meta information transmitted from the content server 10 by being included in the content.

If determined that the head of the content is 3D as a result of the determination of step S102, the receiver 20 receives the 3D content transmitted from the content server 10 and reproduces the same (step S103). The receiver 20 then determines whether the content transmitted from the content server 10 changed from 3D to 2D (step S104), and the receiver 20 continues the reproduction of the 3D content if not changed. The information on whether the content changes from 3D to 2D is described in the control data transmitted from the content server 10 by being included in the content.

If the content transmitted from the content server 10 changes from 3D to 2D as a result of the determination of step S104, or if determined that the head of the content is 2D as a result of the determination of step S102, the receiver 20 receives the 2D content transmitted from the content server 10 and reproduces the same (step S105). The receiver 20 then determines whether the content transmitted from the content server 10 is changed from 2D to 3D (step S106), and the receiver 20 continues the reproduction of the 2D content if not converted. If the content transmitted from the content server 10 changed from 2D to 3D, the process returns to step S103 and the receiver 20 receives the 3D content transmitted from the content server 10 and reproduces the same.

The receiver 20 continues the above operation until the end of the content. Therefore, when operating in the auto mode, the receiver 20 can automatically switch between the reproduction of the 3D video and the reproduction of the 2D video based on the meta information and the control data transmitted from the content server 10.

### [6-2. Case of operating in manual mode]

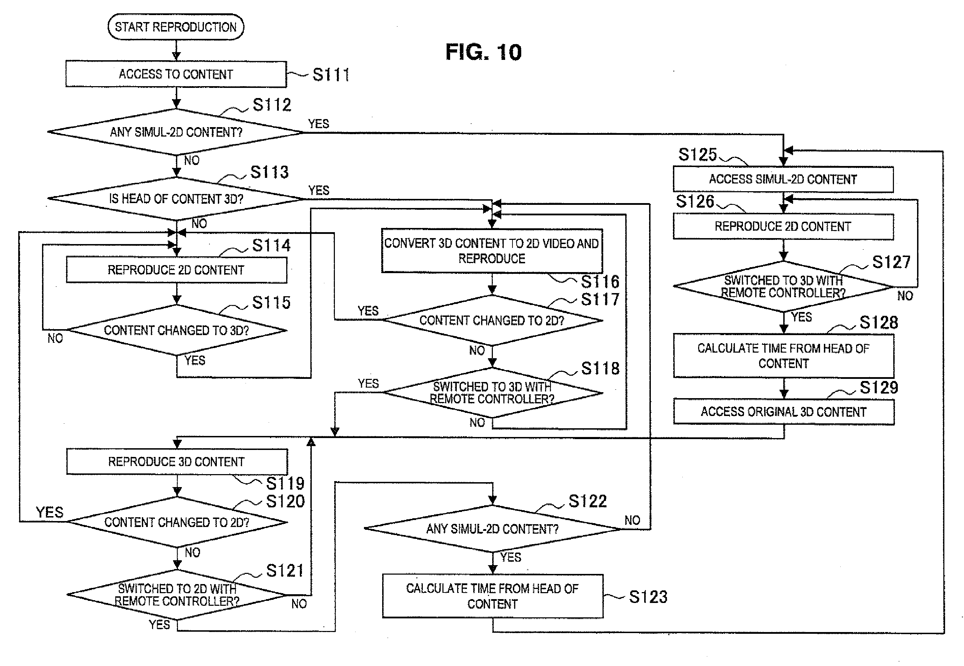

The operation of the receiver 20 when the receiver 20 operates in the manual mode will now be described. Fig. 10 is a flowchart showing the operation of the receiver 20 when operating in the manual mode. The operation of the receiver 20 when operating in the manual mode will be described below using Fig. 10.

In the present embodiment, when the receiver 20 is operating in the manual mode, the receiver 20 prioritizes the reproduction of the 2D video, and the receiver 20 reproduces the 3D video when the reproduction of the 3D video is explicitly instructed from the user of the receiver 20 by the remote controller 30 and the like.

When reproducing the content with the receiver 20 operating in the manual mode, the receiver 20 first accesses the content of the content server 10 (step S111). After the content is transmitted from the content server 10 to the receiver 20, the receiver 20 then determines whether the simul-2D content exists in the transmitted content (step S112). The determination on whether the simul-2D content exists in the transmitted content is made by the 2D-3D control unit 118, for example. The information on whether the simul-2D content exists in the transmitted content is described in the meta information transmitted from the content server 10 by being included in the content.

If the receiver 20 determines that the simul-2D content exists in the transmitted content as a result of the determination of step S112, the receiver 20 accesses the relevant simul-2D content and reproduces the 2D content (step S125). If the receiver 20 determines that the simul-2D content does not exist as a result of the determination of step S112, the receiver 20 then determines whether or not the head of the content is 3D (step S113). The determination on whether the head of the content is 3D or not is made by the 2D-3D control unit 118, for example, The information on whether the head of the content is 3D is described in the meta information transmitted from the content server 10 by being included in the content.

If determined that the head of the content is 3D as a result of the determination of step S 113, the receiver 20 converts the content acquired from the content server 10 from the 3D video to the 2D video and reproduces the same (step S 116). If the head of the content is 2D instead of 3D, the receiver 20 reproduces the content acquired from the content server 10 as is as the 2D video (step S114). When the reproduction of the 2D video starts in step S114, the receiver 20 determines whether the content transmitted from the content server 10 changed from 2D to 3D (step S115), and the receiver 20 returns to step S 114 and continues the reproduction of the 2D content if the content is not changed from 2D to 3D.

If the content transmitted from the content server 10 changed from 2D to 3D as a result of the determination of step S 115, the receiver 20 converts the 3D video to the 2D video and reproduces the same (step S116). When the receiver 20 starts the reproduction of the 2D video converted from the 3D video in step S116, the receiver 20 then determines whether the content transmitted from the content server 10 changed from 3D to 2D (step S117), and the receiver 20 returns to step S114 to start the reproduction of the 2D content if the content changed to 2D. If the content is not changed to 2D as a result of the determination of step S117, the receiver 20 then determines whether the user switched to the reproduction of the 3D video with the remote controller 30 and the like with the content transmitted from the content server 10 in the 3D (step S118). If the user has not switched to the reproduction of the 3D video as a result of the determination of step S118, the process is returned to step S 116 and the reproduction of the 2D content is continued. If the user switched to the reproduction of the 3D video, the receiver 20 receives the 3D content from the content server 10 and reproduces the 3D video (step S119). The receiver 20 executing the reception and the reproduction of the 3D content in step S119 determines whether the content transmitted from the content server 10 changed from 3D to 2D (step S120), and the receiver 20 returns to step S114 and starts the reproduction of the 2D content if the content is changed to 2D as a result of the determination of step S120. The receiver 20 determines whether the user switched to the reproduction of the 2D video with the remote controller 30 and the like with the content transmitted from the content server 10 in the 3D, as a result of the determination of step S120 (step S121).

If the user has not switched to the reproduction of the 2D video as a result of the determination of step S121, the process is returned to step S119 and the reproduction of the 3D content is continued. If the user switched to the reproduction of the 2D video as a result of the determination of step S121, the receiver 20 determines whether the simul-2D content exists in the received content (step S122).

If the simul-2D content exists in the received content as a result of the determination of step S122, the receiver 20 calculates the time from the head of the content being received/reproduced (step S123).

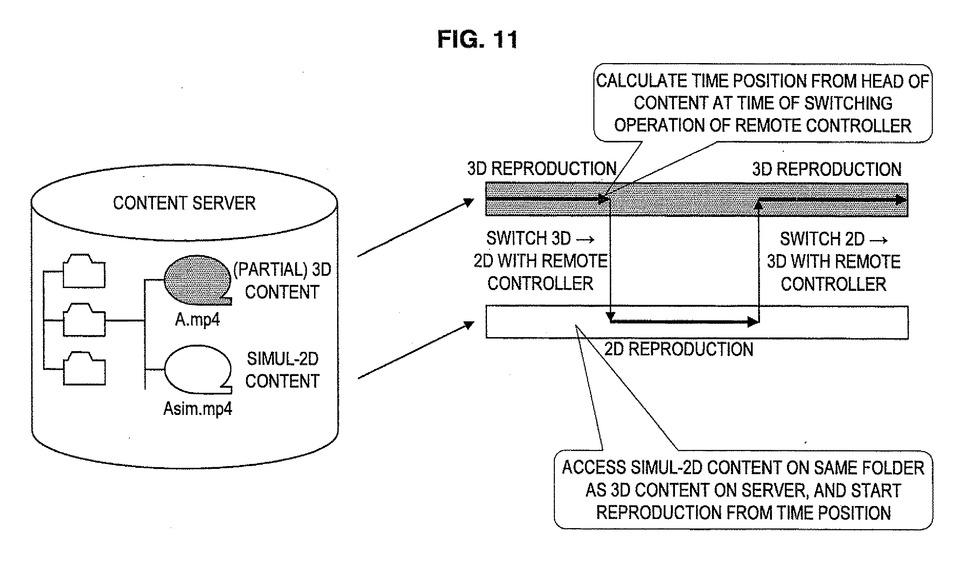

Fig. 11 is an explanatory view showing the outline of the content switching process when the simul-2D content exists in the received content. The simul-2D content (content with file name Asim.mp4) is saved in the same folder as the 3D content (content with file name A.mp4) in the content server 10. The receiver 20 calculates the time position from the head of the content at the time of the switching operation by the remote controller 30 and the like of the user when switching from the 3D content to the simul-2D content. The receiver 20 then accesses the simul-2D content saved in the same folder as the 3D content in the content server 10, and starts the reproduction from the calculated time position. The receiver 20 can seamlessly reproduce the content by switching from the 3D content to the simul-2D content.

If the simul-2D content does not exist in the received content as a result of the determination of step S122, or if the head of the content is 3D as a result of the determination of step S113, the receiver 20 converts the 3D content transmitted from the content server 10 to the 2D video and reproduces the same (step S 116). The processes after step S 116 are as described above, and thus the detailed description thereof will be omitted.

After the receiver 20 calculates the time from the head of the content being received / reproduced in step S123, and when the receiver 20 determines that the simul-2D content exists in the transmitted content as a result of the determination of step S112, the receiver 20 then accesses the specified simul-2D content (step S125). When the receiver 20 accesses the specified simul-2D content (same or different from the server storing the 3D content) and the simul-2D content is transmitted from the content server 10, the receiver 20 receives and reproduces the simul-2D content (step S 126).

The receiver 20 determines whether or not the user switched to the reproduction of the 3D video with the remote controller 30 and the like with the receiver 20 reproducing the simul-2D content (step S127). If the user has not switched to the reproduction of the 3D video with the remote controller 30 and the like as a result of the determination of step S127, the process is returned to step S126 and the reproduction of the simul-2D content is continued. If the user switched to the reproduction of the 3D video with the remote controller 30 and the like, the receiver 20 calculates the time from the head of the content being received / reproduced (step S128), where the receiver 20 accesses the corresponding 3D content from the simul-2D content (step S129) to switch to the reception of the 3D content, and then the receiver 20 returns to step S119 and reproduces the 3D content transmitted from the content server 10.

The switching from the simul-2D content to the 3D content will be described using Fig. 11. The receiver 20 calculates the time position from the head of the content at the time of the switching operation by the remote controller 30 and the like of the user when switching from the simul-2D content to the 3D content. The receiver 20 then accesses the 3D content saved in the same folder as the simul-2D content in the content server 10, and starts the reproduction from the calculated time position. The receiver 20 can seamlessly reproduce the content by switching from the simul-2D content to the 3D content.

The receiver 20 continues the above operation until the end of the content. Therefore, when operating in the manual mode mode, the receiver 20 can switch between the reproduction of the 2D video and the reproduction of the 2D video based on the meta information and the control data transmitted from the content server 10.

The operation of the receiver 20 according to one embodiment of the present invention has been described above. The meta information transmitted from the content server 10 to the receiver 20 according to one embodiment of the present invention will now be described.

### <7. Description example of meta information>

### [7-1. First description example (described inside metafile)]

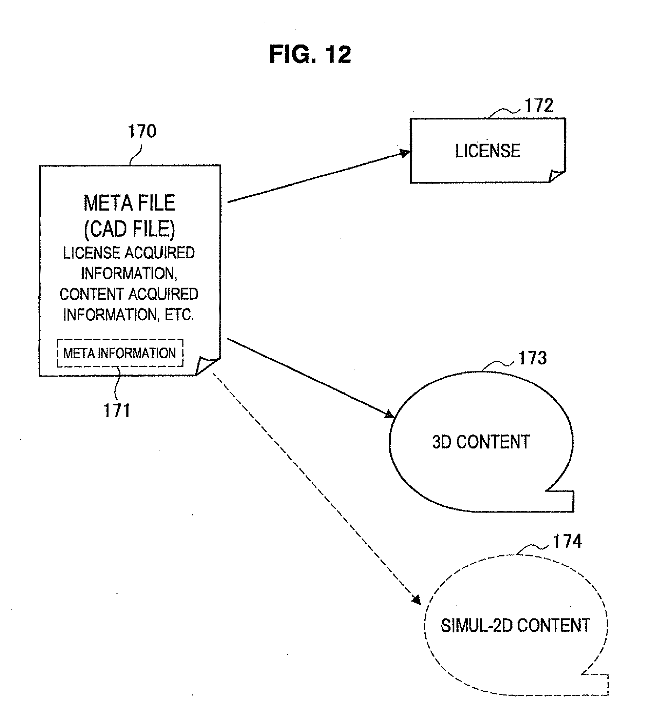

Fig. 12 is an explanatory view showing a first example of an inserting position of the meta information. In the example shown in Fig. 12, a case in which meta information 171 described with the information regarding the 3D content is inserted to a meta file 170 for acquiring a license for reproducing the content and for acquiring the information of the content to reproduce is shown. In this case, the receiver 20 accesses the meta file 170 to acquire the license 172, and then starts the reproduction of the content (3D content 173 and simul-2D content 174).

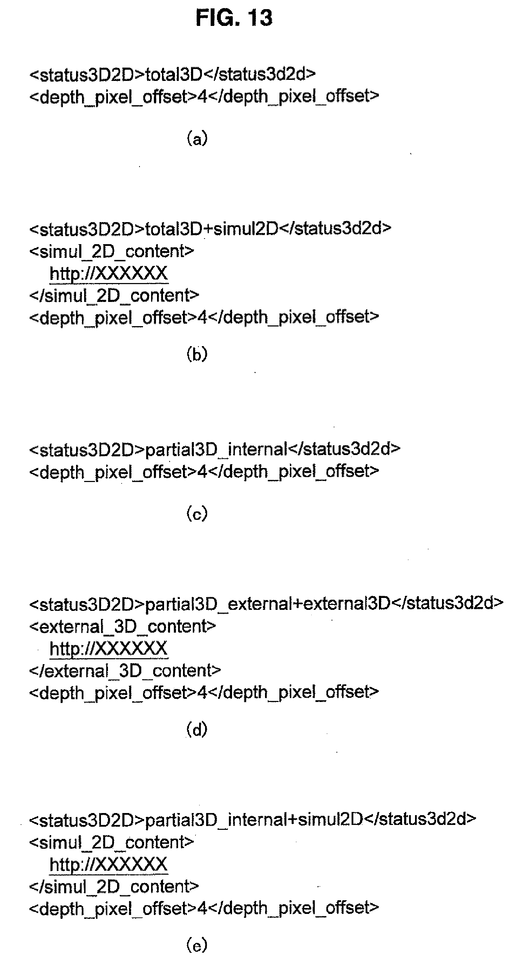

Fig. 13 is an explanatory view showing a description example of the meta information in the first example of the inserting position of the meta information. Fig. 13(a) shows a description example in the case of type 1 (whole 3D content), Fig. 13(b) shows a description example in the case of type 2 (pair of 2D content and 3D content), Fig. 13(c) shows a description example in the case of type 3 (partial 3D content), Fig. 13(d) shows a description example in the case of type 4 (partial external 3D file), and fig. 13(e) shows a description example in the case of type 5 (partial 3D content + simul-2D content).

The portion surrounded with tag <status3D2D> indicates the transmission method of the 3D content. As shown in Figs. 13(a) to 13(e), the content server 10 describes the information corresponding to each transmission method by surrounding it with the tag <status3D2D>, and transmits the same to the receiver 20 through the network 15.

The portion surrounded with tag <simul_2D_content> indicates the URL of the simul-2D content. The tag <simul_2D_content> describes the acquired source URL of the simul-2D content in the case of type 5 (partial 3D content + simul-2D content), and transmits the same from the content server 10 to the receiver 20.

The portion surrounded with tag <depth_pixel_offset> indicates the information indicating the depth of the caption when displaying the caption with the 3D video at the receiver 20.

The portion surrounded with tag <3Dmethod> indicates the transmission method of the 3D video. For instance, the content server 10 describes "SBS" by surrounding it with the tag <3Dmethod> when transmitting the 3D video in the side by side method and describes "FSQ" by surrounding it with the tag <3Dmethod> when transmitting the 3D video in the frame sequential method in the meta information generation unit 152.

The portion surrounded with tag <external_3D_content> indicates the information representing the area of the partial external 3D file in the case of type 4 (partial external 3D file).

When the meta information as shown in Figs. 13A to 13E is transmitted from the content server 10 to the receiver 20, and the meta information is analyzed by the meta information processing unit 108 in the receiver 20, the appropriate switching of the 2D content and the 3D content transmitted from the content server 10 can be carried out.

### [7-2. Second description example (described inside MP4 container)]

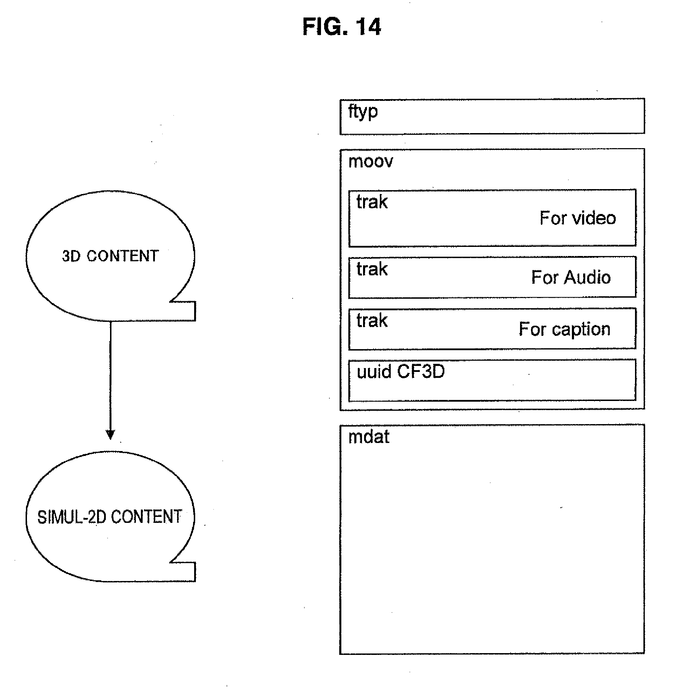

Fig. 14 is an explanatory view showing a second example of the inserting position of the meta information. The example shown in Fig. 14 shows a case of describing the meta information inside the MP4 container. In Fig. 14, the user defined meta data "uuid CF3D" is prepared inside the moov container, and the meta information is described in the "uuid CF3D" to realize the appropriate switching of the 2D content and the 3D content transmitted from the content server 10.

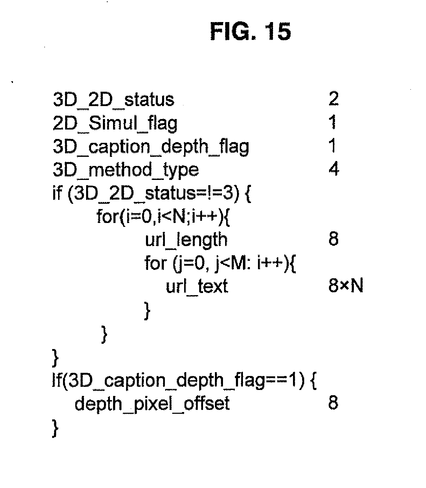

Fig. 15 is an explanatory view showing a description example of the meta information in the second example of the inserting position of the meta information. Fig. 15 shows a description example in binary of when describing the meta information inside the MP4 container. Fig. 15 also shows the length (number of bits) of the respective region. It should be recognized that the length (number of bits) of each region is not limited to that shown in Fig. 15.

The first "3D_2D_status" indicates the transmission method of the 3D content. For instance, if 0 is described, this means that the content is only 2D, if 1 is described, this means that the content is only 3D, if 2 is described, this means that the content is a mixture of 2D and 3D, and if 3 is described, this means that the content is a combination of 2D and external 3D file.

The next "2D_Simul_flag" indicates whether or not the simul-2D content exists. If 1 is described, this means that the simul-2D content exists, and if 0 is described, this means that the simul-2D content does not exist.

The "3D_caption_depth_flag" indicates whether or not information for specifying the depth of the caption exists when displaying the caption with the 3D video at the receiver 20. If 0 is described, this means that the information for specifying the depth of the caption does not exist, and if 1 is described, this means that the information for specifying the depth of the caption exists.

The "3D_method_type" indicates the transmission method of when displaying the 3D video at the receiver 20. If 1 is described, this means that the transmission method is the side by side method, if 2 is described, this means that the transmission method is the top and bottom method, if 3 is described, this means that the transmission method is the frame sequential method, and if 4 is described, this means that the transmission method is the MVC.

The section after the "if" sentence in the next row is effective when "3D_2D_status" is 3 or when "2D_Simul_flag" is 1. The information on the length of the URL information of the post stage is described in the "url_length", and the URL information of the reference destination of the simul-2D content or the external 3D file is described in the "url_text".

The section after the "if" sentence in the third row from the bottom is effective when "3D_caption_depth_flag" is 1. The "depth_pixel_offset" represents the depth of the caption (offset amount between the right eye image and the left eye image corresponding to the depth) when displaying the caption with the 3D video.

When the meta information as shown in Fig. 15 is described inside the MP4 container and transmitted from the content server 10 to the receiver 20, and the meta information is analyzed by the meta information processing unit 108 in the receiver 20, the appropriate switching of the 2D content and the 3D content transmitted from the content server 10 can be carried out.

### <8. Description example of control data>

Next, the description example of the control data transmitted from the content server 10 to the receiver 20 according to one embodiment of the present invention will now be described. Each description example shown below all shows a case of MP4.

### [8-1. First description example]

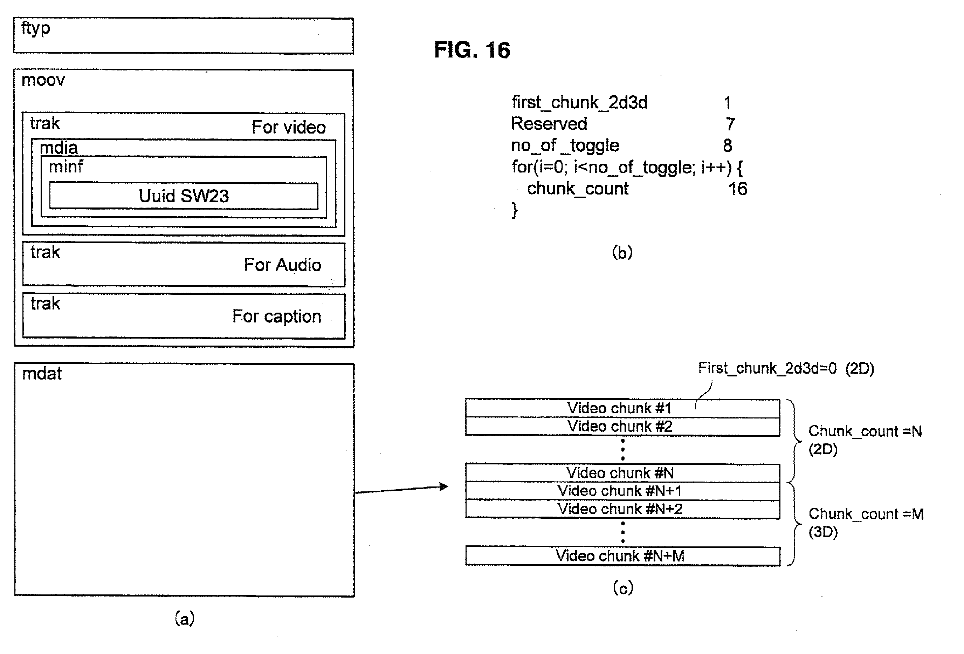

Fig. 16 is an explanatory view showing a first description example of the control data transmitted from the content server 10 to the receiver 20. In Fig. 16, a case where the user defined box "Uuid SW23" is provided inside the minf container of the MP4 container and the control data is described in the "Uuid SW23" is shown.

Fig. 16 (a) shows a structure of the MP4 container, and Fig. 16(b) shows one example of the control data described in the "Uuid SW23". The "first_chunk_2d3d" in the control data shown in Fig. 16(b) shows whether the chunk at the head of the content is 2D or 3D. If 0 is described, this means that the chunk at the head is 2D, and if 1 is described, this means that the chunk at the head is 3D.

The next "no_of_toggle" with the reserve region (reserved) in between indicates the number of times the 2D and the 3D switch in the relevant content, that is, the number of toggles.

The "chunk_count" indicates the number of chunks of the 2D video zone or the 3D video zone. Since the time per one chunk is defined in advance, at what timing to switch from 2D to 3D can be grasped by referencing the number of chunks, and from 3D to 2D by referencing the control data.

### [8-2. Second description example]

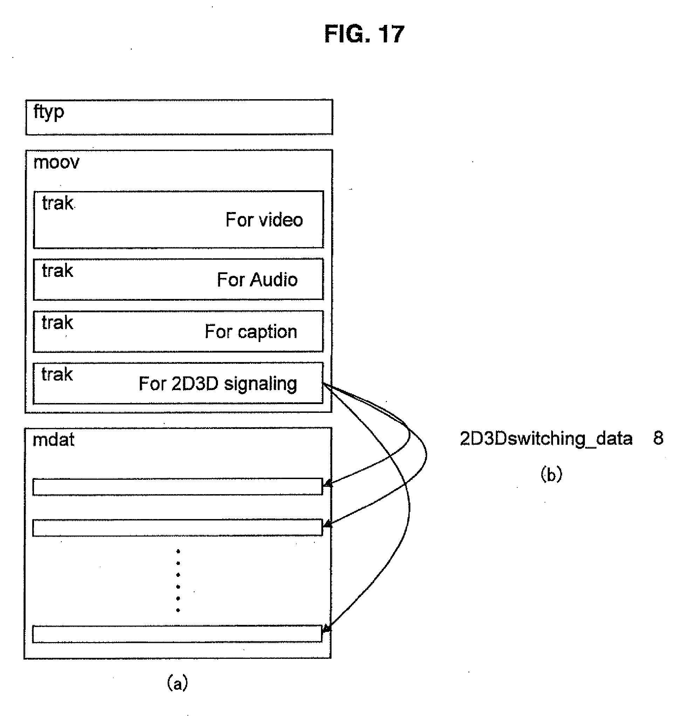

Fig. 17 is an explanatory view showing a second description example of the control data transmitted from the content server 10 to the receiver 20. The second description example describes the information on which position in the mdat box the data, in which the 2D video and the 3D video are switched, is described in the trak container inside the moov container of the MP4 container, as shown in Fig. 17(a).

In the second description example, information on whether the following video is the 2D video or the 3D video defined as "2D3Dswitching_data" shown in Fig. 17(b) is stored in the mdat box at the timing the 2D and the 3D are switched. The "2D3Dswitching_data" indicates that the following video is a 2D video if 0, and that the following video is a 3D video if 1. The trak container describes information on which position in the mdat box the "2D3Dswitching_data" described inside the mdat box is described. Therefore, at what timing to switch from 2D to 3D can be grasped by referencing the switching timing information of the 2D video and the 3D video described inside the trak container, and from 3D to 2D by referencing the control data.

### [8-3. Third description example]

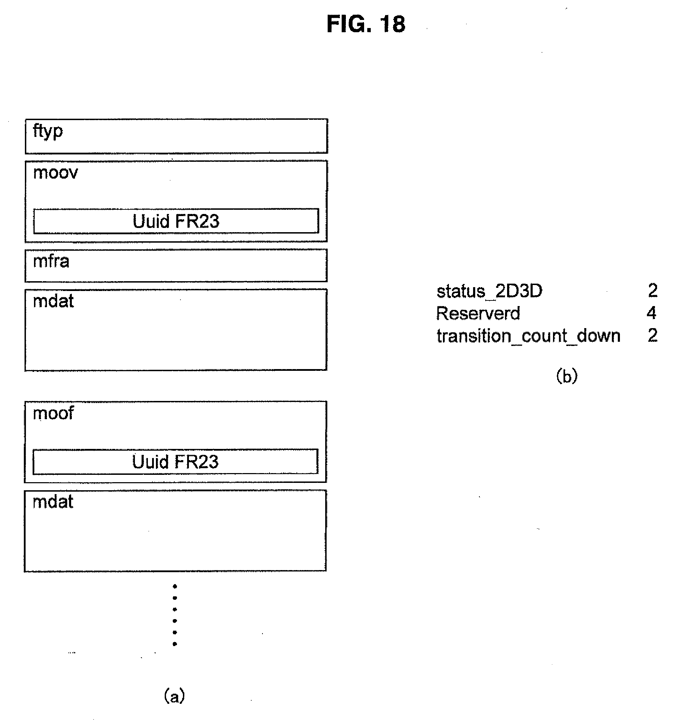

Fig. 18 is an explanatory view showing a third description example of the control data transmitted from the content server 10 to the receiver 20. The third description example describes a status on whether the respective divided block (fragment) is a 2D video or a 3D video in the moov container and the moof container when the file is finely divided (e.g., in units of one second).

In the third description example, the status on whether each fragment is the 2D video or the 3D video defined in "Uuid FR23" is described in the moov container and the moof container of each fragment, as shown in Fig. 18(a). The information shown in Fig. 18(b) is described in "Uuid FR23". The "status_2D3D" indicates the information on whether each fragment is 2D or 3D, whether switching from 2D to 3D, or switching from 3D to 2D. For instance, if 0 is described, this means that the 2D video is continued, if 1 is described, this means that the 3D video is continued, if 2 is described, this means the transition period from the 2D video to the 3D video, and if 3 is described, this means the transition period from the 3D video to the 2D video. The next "transition_count_down" with the reserve region (reserved) in between indicates the number of fragments until switching from the 2D video to the 3D video, or from the 3D video to the 2D video.

Therefore, at what timing to switch from 2D to 3D can be grasped by referencing the switching timing information of the 2D video and the 3D video described inside the moov container and the moof container, and from 3D to 2D by referencing the control data.

### <9. Conclusion>

According to one embodiment of the present invention described above, the content server 10 generates the meta information described with the information that can cover the assumed video transmission methods, and the control data described with the information on the switching timing of the 2D video and the 3D video according to the access of the content from the receiver 20, and transmits the same from the content server 10 to the receiver 20 through the network 15 when distributing the 3D video in the broadcasting service using the broadband line such as the Internet. The receiver 20 executes the reception of the content and the reproduction of the content along the content of the meta information by analyzing the meta information, and also switches and displays the 2D video and the 3D video automatically in the case of the auto mode and based on an instruction from the user in the case of the manual mode by analyzing the control data.

Thus, when distributing the 3D video in the broadcasting service using the broadband line, the meta information and the control data as described above are generated and transmitted with the content on the content server 10 side, so that the receiver 20 that received the meta information and the control data can execute an appropriate content switching process.

The series of processes described above can be executed by hardware or can be executed by software. When executing the series of processes by software, the program for configuring the software is installed from a program recording medium to a computer incorporated in a dedicated hardware or a versatile personal computer capable of executing various functions by installing various programs.

Communication may, of course, be wireless communication and wired communication, and may also be communication in which the wireless communication and the wired communication coexist, that is, communication where wireless communication is carried out in a certain zone and wired communication is carried out in other zones. Furthermore, the communication from a certain device to another device may be carried out with wired communication, and the communication from the another device to the certain device may be carried out with wireless communication.

The preferred embodiments of the present invention have been described above with reference to the accompanying drawings, whilst the present invention is not limited to the above examples, of course. A person skilled in the art may find various alternations and modifications within the scope of the appended claims, and it should be understood that they will naturally come under the technical scope of the present invention.

The present invention can be applied to signal transmission methods, signal transmission devices, and signal reception devices, and can be particularly applied to a signal transmission method, a signal transmission device, and a signal reception device when distributing a 3D video using the broadband line.

### Reference Signs List

- 10: content server
- 15: network
- 20: receiver
- 30: remote controller
- 102: communication I/F
- 104: streaming reception processing unit
- 106: demultiplexer
- 108: meta information processing unit
- 110: control data processing unit
- 112: video decoder
- 114: caption decoder
- 116: audio decoder
- 118: 2D-3D control unit
- 120: 3D processing unit
- 122: 2D conversion unit
- 124: selector
- 126: caption conversion unit
- 128: setting information storage unit
- 130: remote controller I/F
- 132: streaming control unit
- 134,136: adder
- 138: display unit
- 140: speaker
- 151: content saving unit
- 152: meta information generation unit
- 153: control data generation unit
- 154: encoding unit
- 155: transmission unit

## Claims

1. A signal transmission method comprising the step of, if at least one part of a content distributed through a network includes a stereoscopic image display zone for displaying a stereoscopic image, transmitting with the content:
switching information related to a switching timing of the stereoscopic image display zone in units of contents;
transmission method information indicating a transmission method of the stereoscopic image; and
distribution source information indicating a distribution source of another content when the stereoscopic image or a two-dimensional image corresponding to the stereoscopic image is distributed in another content.

2. The signal transmission method according to claim 1, wherein the transmitting step includes transmitting the switching information by describing inside the content, and transmitting information other than the switching information by describing inside information distributed prior to reproduction of the content.

3. The signal transmission method according to claim 1, wherein the transmitting step transmits the switching information, the transmission method information, and the distribution source information by describing inside the content.

4. The signal transmission method according to any one of claims 1 to 3, wherein when a reception side switches to the two-dimensional image corresponding to the stereoscopic image in the stereoscopic image display zone, switch is made to the transmission of another content for displaying the two-dimensional image prepared in advance.

5. The signal transmission method according to claim 4, wherein the transmitting step includes starting the transmission of another content at a time point the reception side switched to the two-dimensional image.

6. The signal transmission method according to any one of claims 1 to 3, wherein the information transmitted in the transmitting step are described inside an minf container of an MP4 container.

7. The signal transmission method according to any one of claims 1 to 3, wherein the information transmitted in the transmitting step are described inside a moov container and inside a mdat box of the MP4 container.

8. The signal transmission method according to any one of claims 1 to 3, wherein the information transmitted in the transmitting step are described inside a moov container and inside a moof container of the MP4 container.

9. A signal reception device comprising:
a reception unit for receiving stereoscopic image data for displaying a stereoscopic image, and for receiving stereoscopic image related information in a stereoscopic image display zone for displaying the stereoscopic image contained in at least one part of a content distributed through a network along with the content;
a switching control unit for switching display of the stereoscopic image or a two-dimensional image using the information received by the reception unit; and
a display unit for displaying the stereoscopic image in the stereoscopic image display zone based on the stereoscopic image related information,
wherein the stereoscopic image related information includes:
switching information related to a switching timing of the stereoscopic image display zone in units of contents, transmission method information indicating a transmission method of the stereoscopic image, and distribution source information indicating a distribution source of another content when the stereoscopic image or a two-dimensional image corresponding to the stereoscopic image is distributed in another content.

10. The signal reception device according to claim 9, wherein the switching control unit automatically switches to the stereoscopic image or the two-dimensional image when reaching a switching timing of the stereoscopic image display zone.

11. The signal reception device according to claim 9, wherein the switching control unit instructs switching of reception of another content with respect to the reception unit when another content for displaying the two-dimensional image corresponding to the stereoscopic image exists in the stereoscopic image display zone.

12. A signal transmission device comprising:
an image data generation unit for generating stereoscopic image data for displaying a stereoscopic image;
an information generation unit for generating stereoscopic image related information in a stereoscopic image display zone for displaying the stereoscopic image contained in at least one part of a content distributed through a network; and
a transmission unit for transmitting the stereoscopic image data generated by the image data generation unit and the stereoscopic image related information generated by the information generation unit along with the content,
wherein the stereoscopic image related information generated by the information generation unit and transmitted with the content includes:
switching information related to a switching timing of the stereoscopic image display zone in units of contents, transmission method information indicating a transmission method of the stereoscopic image, and distribution source information indicating a distribution source of another content when the stereoscopic image or a two-dimensional image corresponding to the stereoscopic image is distributed in another content.

13. The signal transmission device according to claim 12, wherein the information generation unit describes the switching information inside the content, and describes information other than the switching information inside information distributed prior to reproduction of the content.

14. The signal transmission device according to claim 12, wherein the information generation unit describes the switching information, the transmission method information, and the distribution source information inside the content for transmission.

15. The signal transmission device according to any one of claims 12 to 14, wherein when a reception side switches to the two-dimensional image corresponding to the stereoscopic image in the stereoscopic image display zone, the transmission unit switches to the transmission of another content for displaying the two-dimensional image prepared in advance.

16. The signal transmission device according to any one of claims 12 to 14, wherein the transmission unit starts the transmission of another content at a time point the reception side switched to the two-dimensional image.

17. The signal transmission device according to any one of claims 12 to 14, wherein the information transmitted by the transmission unit are described inside an minf container of an MP4 container.

18. The signal transmission device according to any one of claims 12 to 14, wherein the information transmitted by the transmission unit are described inside a moov container and inside a mdat box of the MP4 container.

19. The signal transmission device according to any one of claims 12 to 14, wherein the information transmitted by the transmission unit are described inside a moov container and inside a moof container of the MP4 container.
